# EUROPÄISCHE PATENTSCHRIFT

(11) **EP 2 404 018 B1**
(45) Veröffentlichungstag und Bekanntmachung des Hinweises auf die Patenterteilung: **29.03.2017**
(21) Anmeldenummer: 10779201.2
(22) Anmeldetag: 21.10.2010
(51) Int. Cl.: E06B 3/673

(54) **VORRICHTUNG UND VERFAHREN ZUM APPLIZIEREN VON ABSTANDHALTERBÄNDERN AUF GLASSCHEIBEN**
DEVICE AND METHOD FOR APPLYING SPACER TAPES TO GLASS PANES
DISPOSITIF ET PROCÉDÉ POUR APPLIQUER DES BANDES D'ÉCARTEMENT SUR DES VITRES

(30) Priorität: 22.10.2009 AT 16642009
(43) Veröffentlichungstag der Anmeldung: 11.01.2012
(73) Patentinhaber: LISEC Austria GmbH, 3353 Seitenstetten (AT)
(72) Erfinder: MADER, Leopold, A-3364 Neuhofen/Ybbs (AT); KARNER, Leopold, A-3375 Krummnußbaum (AT)
(74) Vertreter: Beer & Partner Patentanwälte KG
(86) Internationale Anmeldenummer: PCT/AT2010/000401
(87) Internationale Veröffentlichungsnummer: WO 2011/047402

(56) Entgegenhaltungen:
- DE-A1- 3 002 904
- DE-A1- 10 350 312
- US-B1- 6 378 586

## Beschreibung

Die Erfindung betrifft eine Vorrichtung mit den Merkmalen des Oberbegriffes von Anspruch 1. Die Erfindung betrifft auch eine Anlage und ein Verfahren zum Applizieren von Abstandhalterbändern auf Glasscheiben.

Üblicherweise bestehen die Abstandhalter zwischen den Glasscheiben einer zwei oder auch mehr Glasscheiben umfassenden Isolierglaseinheit aus Aluminium- oder Stahlhohlprofilen.

Aus der DE-A-30 02 904 ist ein häufig als "Swiggle-Strip" bezeichneter Abstandhalter in Form eines Bandes mit Rechteckquerschnitt bekannt, das, mit Schutzfolien versehen, von einer Vorratstrommel oder -haspel kommt und mittels einer mit einem wendbaren Kopf ausgestatteten Vorrichtung ("Applizierkopf") auf die Glasscheibe aufgebracht wird. Bandförmige Abstandhalter auf der Basis von Butylkautschuk sind zäh-plastisch, stark klebend (was zur Erzielung einer gasdichten Verbindung zunächst mit der ersten und später mit der zweiten Glasscheibe der Isolierglaseinheit erwünscht ist), haben aber eine stark temperaturabhängige Viskosität.

Aus der US 6,378,586 B ist eine Vorrichtung zum Anbringen klebriger Abstandhalter auf eine horizontal liegende Glasscheibe bekannt. Die bekannte Vorrichtung umfasst (vgl. Fig. 9 bis 13) zwei Applizierköpfe, die Abstandhalter auf eine einzige Glasscheibe aufbringen, wobei jedem der beiden Applizierköpfe ein bestimmter Bereich der Glasscheibe zugeordnet ist. Der eine Applizierkopf ist nur dem zur Förderrichtung parallelen Rand der Glasscheibe zugeordnet. Der andere Applizierkopf wird durch kombiniertes Bewegen der Glasscheibe und des Applizierkopfes ausschließlich entlang der drei anderen Ränder der Glasscheibe bewegt. Somit haben die Applizierköpfe, der aus der US 6,378,586 B bekannten Vorrichtung, unterschiedliche "Aufgaben".

In jüngerer Zeit sind wesentlich weniger temperaturempfindliche elastoplastische Abstandhalterbänder auf der Basis von Polyurethan oder Ähnlichem entwickelt worden, die ebenfalls Rechteckquerschnitt haben, form- und abmessungsbeständiger als der sogenannte "Swiggle-Strip" sind, auf der späteren Außenseite eine Diffusionssperre, z.B. eine Kaschierung aus Aluminiumfolie, haben und auf den zur Verklebung mit den Glasscheiben bestimmten Schmalseiten herstellerseitig mit einer dünnen, bis zum Applizieren des Bandes mit Schutzfolien abgedeckten Beschichtung aus einem stark adhäsiven Kleber versehen sind.

Aus der DE-A-102 12 359 sind ein Verfahren und eine Vorrichtung zum Applizieren eines derartigen Bandes auf wenigstens eine Glasscheibe einer aus wenigstens zwei Glasscheiben bestehenden Isolierglaseinheit bekannt.

Aus der DE-A-103 50 312 ist eine Vorrichtung zum Herstellen von Isolierglasscheiben bekannt, die eine Vorrichtung zum Applizieren eines elastoplastischen Bandes aufweist. Diese Vorrichtung zum Applizieren eines elastoplastischen Bandes als Abstandhalter bei der Herstellung von Isolierglasscheiben umfasst eine Vorratshaspel für das Band, mehrere angetriebene Bandführungsrollen und einen relativ zu einer ersten Glasscheibe beweglichen Andrückkopf für das Band. Im Unterschied zum Stand der Technik wird ein elastoplastisches Band verwendet, dessen Seitenflächen noch nicht mit einem Kleber beschichtet sind. Dieser wird vielmehr erst kurz vor dem Applizieren des Bandes auf dessen beide Seitenflächen aufgetragen. Hierzu sind zwischen der Vorratshaspel und dem Andrückkopf einander gegenüberliegende Düsen vorgesehen, welche die Seitenflächen des Bandes mit dem Kleber beschichten.

Insbesondere beim Herstellen von Mehrscheiben-Isofierglas, also Isolierglasscheiben mit drei oder mehr Glasscheiben, die miteinander durch Abstandhalterbänder verbunden sind, ist mit der bekannten Vorrichtung ein rasches und zeitsparendes Arbeiten nicht möglich, da nacheinander auf zwei Scheiben Abstandhalter aufzubringen sind und erst dann das Isolierglaselement zum Zusammenfügen der Applizierscheiben (= Glasscheibe mit appliziertem Abstandhalterband) und der Deckscheibe (= Glasscheibe ohne Abstandhalterband) möglich ist.

Auch beim Herstellen von Zweischeiben-Isolierglas könnte oft Zeit gespart werden, wenn mehrere Glasscheiben gleichzeitig mit Abstandhalterbändern belegt werden könnten.

Der Erfindung liegt daher die Aufgabe zu Grunde, eine Vorrichtung und ein Verfahren der eingangs genannten Gattungen zur Verfügung zu stellen, mit welcher das Applizieren flexibler, insbesondere elastoplastischer, Abstandhalterbänder auf Glasscheiben im Zuge des Herstellens von Isolierglasscheiben zeitsparender und mit weniger Aufwand als bisher möglich ist.

Gelöst wird diese Aufgabe erfindungsgemäß mit einer Vorrichtung, welche die Merkmale von Anspruch 1 aufweist.

Die Aufgabe wird, was das Verfahren betrifft, durch den unabhängigen auf das Verfahren gerichteten Anspruch gelöst.

Bevorzugte und vorteilhafte Ausgestaltungen der Erfindung sind Gegenstand der Unteransprüche.

Dadurch, dass in der erfindungsgemäßen Vorrichtung mehr als ein Applizierkopf vorgesehen ist, können zwei Glasscheiben gleichzeitig mit Abstandhalterband belegt werden. Es ist also das Applizieren flexibler Abstandhalterbänder zeitsparend möglich.

Insbesondere wenn mit der erfindungsgemäßen Vorrichtung gleich große und identische Umrissformen aufweisende Glasscheiben mit Abstandhalterbändern zu belegen sind, bewährt sich eine Ausführungsform der Erfindung, bei welcher die Applizierköpfe der erfindungsgemäßen Vorrichtung synchron bewegbar sind.

Insbesondere erlaubt es die Erfindung zum Herstellen von Dreischeiben-Isolierglas ein Verfahren anzuwenden, das beispielsweise wie folgt arbeitet: Die erste Scheibe (Deckscheibe) fährt in die Anlage ein und wird, ohne dass auf ihr ein Abstandhalterband appliziert wird, durch die Anlage gefördert. Daraufhin wird die zweite Glasscheibe, d.h. eine Glasscheibe, auf welche ein Abstandhalterband zu applizieren ist (1. Applizierscheibe), bis zu dem bezogen auf die Förderrichtung zweiten Applizierkopf bewegt, dort von einer Halteeinrichtung erfasst, beispielsweise angesaugt, vermessen und an der Halteeinrichtung in die Applizier-Startposition bewegt.

Sobald dies geschehen ist oder, soweit möglich, zeitlich überlappend, wird eine dritte Glasscheibe (2. Applizierscheibe) bis zu dem bezogen auf die Förderrichtung ersten Applizierkopf bewegt, dort von einer dort vorgesehenen, weiteren Halteeinrichtung erfasst und in die Position für den Applizierstart bewegt. Sobald dies geschehen ist, werden beide Applizierköpfe in Bewegung gesetzt und durch kombinierte Bewegung der Glasscheiben einerseits (bevorzugt in Horizontalrichtung) und der Applizierköpfe in einer dazu normalen Richtung (bevorzugt im Wesentlichen lotrecht auf und ab) andererseits auf den Rand der beiden Glasscheiben jeweils ein Abstandhalterband appliziert.

Dadurch, dass die Größe der ersten Applizierscheibe im Bereich des auslaufseitigen Applizierkopfes mit Hilfe einer Einrichtung zum Vermessen der Glasscheibe gemessen wird, kann die Steuerung der Bewegungen der Applizierköpfe einerseits und der Glasscheiben (durch die ihnen zugeordneten Halteeinrichtungen) andererseits so erfolgen, dass das Abstandhalterband mit dem gewünschten Abstand vom äußeren Rand der Glasscheibe aufgebracht (appliziert) wird.

In einer vorteilhaften Ausführungsform ist der erfindungsgemäßen Vorrichtung nach einer Einrichtung zum Verschließen der zunächst noch offenen Ecke im Abstandhalter und vor einer nachgeschalteten Presse, insbesondere einer Presse, in der Isolierglaselemente mit Gas gefüllt werden, ein Pufferspeicher nachgeschaltet. Dieser Pufferspeicher, der beispielsweise sechs Fächer für Glasscheiben aufweist, erlaubt es, die unterschiedlichen Arbeitszyklen und Abläufe zwischen der erfindungsgemäßen Vorrichtung und der (Gasfüll-) Presse auszugleichen. Die Presse, insbesondere die Gasfüllpresse, kann mit einer oder zwei beweglichen Pressplatten ausgebildet sein und im Übrigen so (ähnlich) aufgebaut sein und arbeiten, wie dies aus der EP 0 603 148 A, EP 0 674 085 A, EP 0 674 086 A oder der EP 0 674 087 A bekannt ist.

Der Pufferspeicher kann so ausgebildet und betreibbar sein, wie dies aus der EP 0 816 265 A oder der EP 0 704 389 A an sich bekannt ist.

Weitere Einzelheiten und Merkmale der Erfindung ergeben sich aus der nachstehenden Beschreibung eines Ausführungsbeispiels der erfindungsgemäßen Vorrichtung anhand der Zeichnungen.

Es zeigt:
Fig. 1 eine erfindungsgemäße Einrichtung in Vorderansicht und
Fig. 2 eine Draufsicht auf die Anlage aus Fig. 1,
Fig. 3 eine perspektivische Darstellung eines an sich aus der DE 102 12 359 A bekannten Applizierkopfes einer Vorrichtung zum Applizieren eines elastoplastischen Abstandhalterbandes,
Fig. 4 den gleichen Applizierkopf, gesehen etwa aus der Richtung "A" in Fig. 3,
Fig. 5 eine der Fig. 4 entsprechende, etwas vereinfachte Aufsicht
Fig. 6 eine Schrägaufsicht mit Band und
Fig. 7 stark vereinfact eine Einrichtung mit nachgeschalteten Anlageteilen.

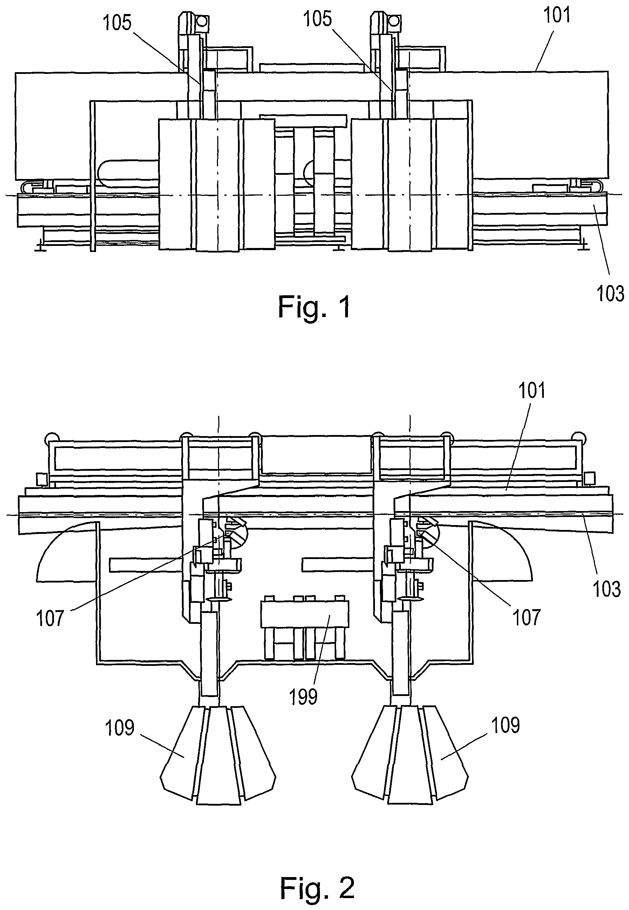

Die in den Fig. 1 und 2 gezeigte beispielhafte Ausführungsform einer Vorrichtung zum Applizieren von (elastoplastischen) Abstandhalterbändern auf Glasscheiben im Zuge des Herstellens von Mehrscheiben-Isolierglas, im Ausführungsbeispiel Dreischeiben-Isolierglas, besitzt folgenden grundlegenden Aufbau.

Die Vorrichtung umfasst eine im Wesentlichen lotrecht ausgerichtete, im Normalfall um wenige Grad, etwa 5°, zur Lotrechten nach hinten geneigte Stützwand 101, an welcher die Glasscheiben gehalten werden. Die Stützwand 101 kann eine Rollenwand, eine Luftkissenwand oder einfach eine Wand mit einer Gleitfläche sein.

Am unteren Rand der Stützwand 101 ist ein Linearförderer 103 vorgesehen, der eine beliebige Ausführungsform besitzen und beispielsweise eine Reihe von Rollen oder Förderbänder aufweisen kann. Es ist auch denkbar und unter Umständen vorteilhaft, wenn der Linearförderer 103 in mehrere Förderabschnitte unterteilt ist.

Im unteren Bereich der Stützwand 101, insbesondere knapp oberhalb des Linearförderers 103, sind Haltevorrichtungen für Glasscheiben, die mit Abstandhalterband zu belegen sind, vorgesehen. Diese Haltevorrichtungen sind insbesondere auch dazu eingerichtet, die gehaltene Glasscheibe horizontal, also quer zur Bewegungsrichtung der Applizierköpfe 107, zu bewegen. Hierzu sind die Haltevorrichtungen beispielsweise mit Saugköpfen, Unterdruck-Förderbändern oder ähnlichem ausgestattet.

Mit Abstand vor der Stützwand 101 und parallel zu dieser sind in lotrechten Ebenen ausgerichtete Linearführungen 105 (Vertikalachsen) für zwei Applizierköpfe 107 vorgesehen, über welche (elastoplastische) Abstandhalterbänder auf Glasscheiben aufgebracht werden können.

Den Applizierköpfen 107 werden Abstandhalterbänder von Vorratstrommeln zugeführt, die in Gehäusen 109 untergebracht sind. Dabei können die Gehäuse 109 klimatisiert sein, also als Klimaboxen ausgeführt sein. Das Zuführen der Abstandhalterbänder zu den Applizierköpfen kann beispielsweise so erfolgen, wie dies aus der DE-A-103 50 312 an sich bekannt ist.

Im gezeigten Ausführungsbeispiel ist zwischen den beiden Applizierköpfen 107 eine Versorgungseinheit 199 für Kleber auf Butylkautschukbasis vorgesehen, die beide Applizierköpfe 107 mit Kleber beschickt, so dass mit Hilfe von in den Applizierköpfen 107 vorgesehenen Düsen das Auftragen (Aufspritzen) von Kleber auf die Seitenflächen des Abstandhalterbandes erfolgen kann.

Die Konstruktionen der Applizierköpfe 107 und der Einrichtung, in welchen die Vorratstrommein vorgesehen sind, können im Wesentlichen einen Aufbau haben, der den Applizierköpfen entspricht, die in der DE-A-102 12 359 geoffenbart sind.

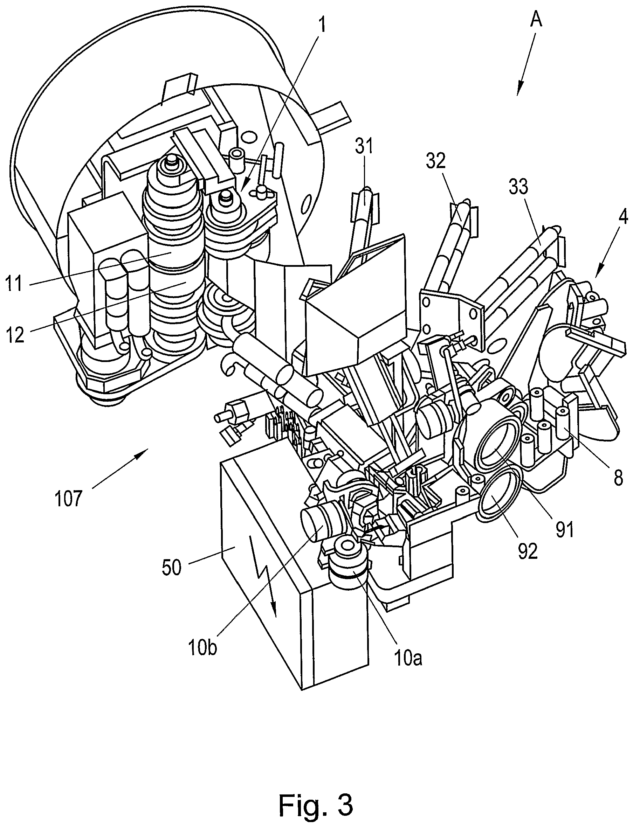

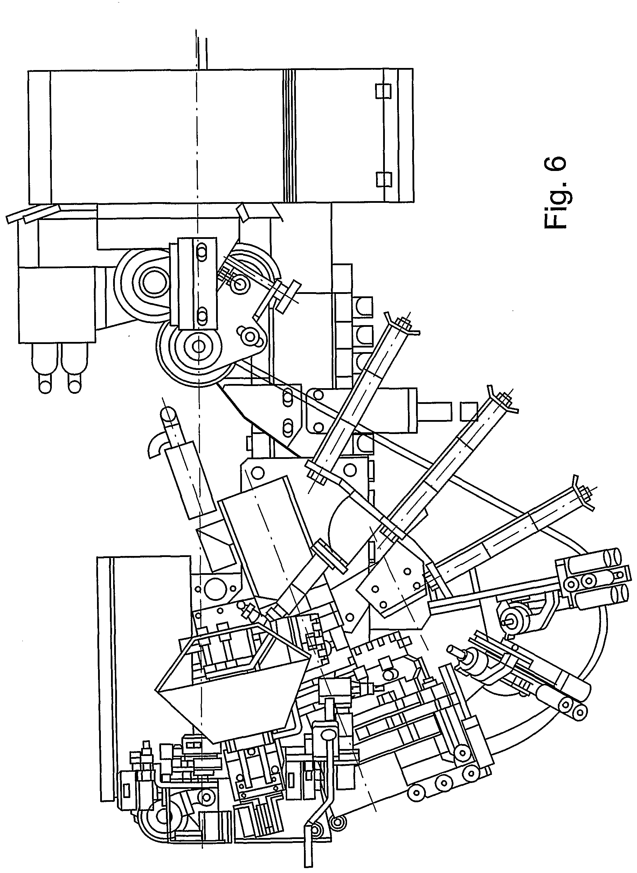

Diese Konstruktion wird nachstehend anhand der Fig. 3 bis 6, welche den Fig. 1 bis 4 der DE-A-102 12 359 entsprechen, beschrieben.

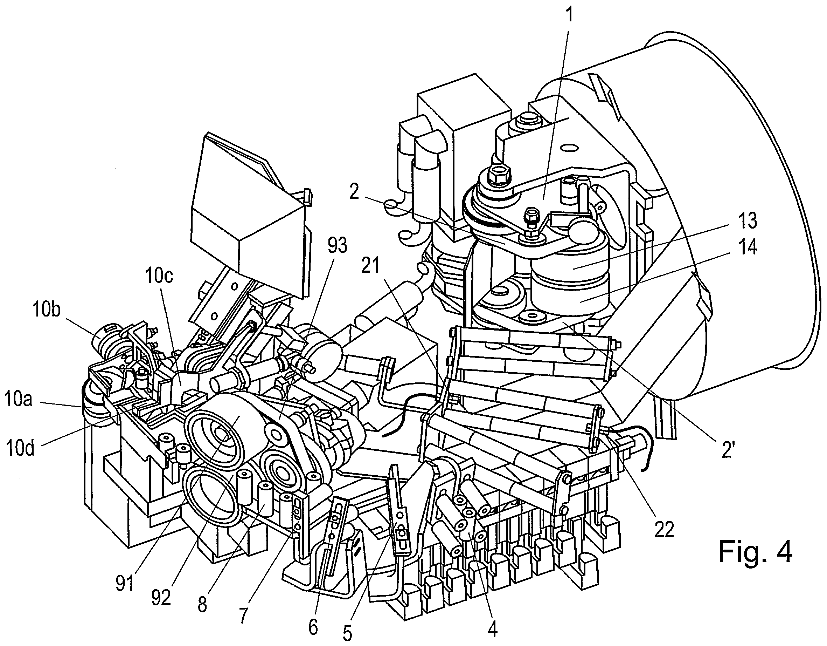

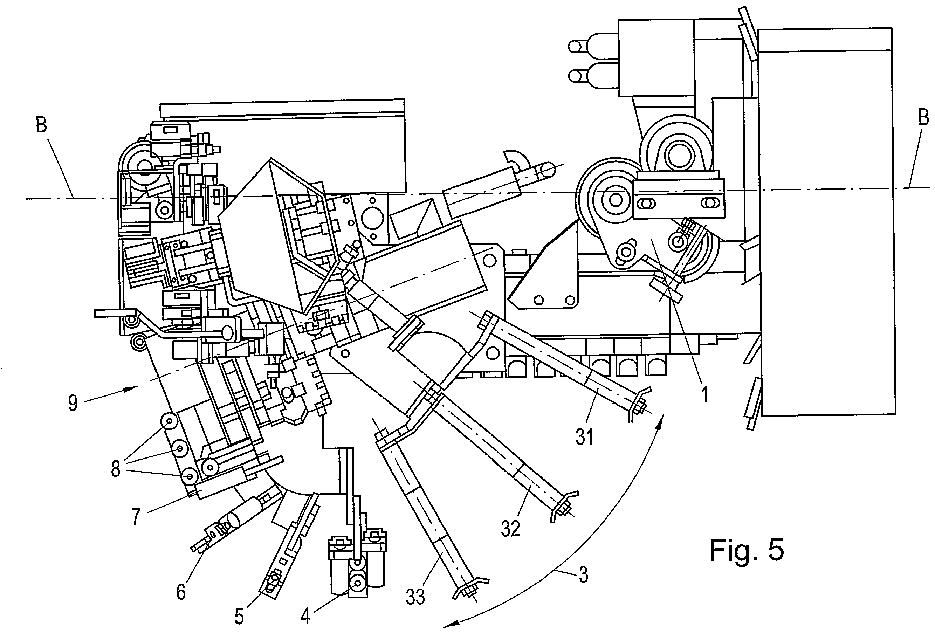

Der Applizierkopf 107, der zum Abfahren der in der Regel vier Seitenränder einer Glasscheibe in an sich bekannter Weise um die Achse B-B in Fig. 5 schrittweise wendbar ist, umfasst, in Richtung des Bandtransportes von einer nicht dargestellten Vorratstrommel zur Applizierstelle, folgende, im vorliegenden Zusammenhang funktionswesentliche Teile:
- Ein erster Bandtransport 1 wird über eine Maschinensteuerung 50 und zwei Zahnriemen 2, 2' (vgl. Fig. 4) regelbar angetrieben und umfasst vier Rollen 11, 12, 13, 14, von denen jeweils die Rollenpaare 11 und 13 sowie 12 und 14 zusammenwirken und optimal für Bänder unterschiedlicher Breite bestimmt sind. Dem Bandtransport 1 wird das Band stehend oder hochkant von der nicht dargestellten Vorratstrommel (in den Gehäuse 109) spannungsfrei zugeführt. Hierzu ist die Vorratstrommel mit einem über die Maschinensteuerung geregelten Abwickelantrieb versehen.
- An den Bandtransport 1 schließt sich eine im Bogen geführte Ausgleichstrecke 3 (vgl. Fig. 5) an, in der das Band zwischen schlitzförmigen Führungen, bestehend aus drei Führungs- und Stützrollenpaaren 31, 32, 33, so geführt wird, dass es quer zu seiner Transportrichtung in der Seitenebene, jedoch nicht in der Höhenebene, ausweichen kann.
- Die Ausgleichstrecke 3 endet an einer sechs Rollen umfassenden Bandführung 4, auf welche drei Rollenpaare 5, 6 und 7 folgen, die das Band um 90° in eine "liegende" Orientierung wenden. Weitere Rollen 8 übernehmen die Seitenführung.
- Dann läuft das Band in einen zweiten Bandtransport 9 ein, der zwei zusammenwirkende Rollen 91 und 92 umfasst, die über einen Zahnriemen 93 von der Maschinensteuerung regelbar angetrieben werden.
- Der zweite Bandtransport 9 führt das Band der eigentlichen Applizierstelle zu. Diese umfasst neben den üblichen Andruckrollen 10a (für die horizontalen Schenkel des späteren Rahmens) und 10b (für die vertikalen Schenkel des späteren Rahmens) die ebenfalls üblichen und deshalb nicht näher erläuterten Einrichtungen zum Ausstanzen der Gehrungskeile an den Stellen, an denen der Applizierkopf zur Ausbildung einer Ecke gewendet wird sowie einen Hebel 10c mit einer Bandauflage 10d (vgl. Fig. 4). Der Hebel 10c ist schwenkbar und unterstützt im Wiederausfall das Band, insbesondere bei Annäherung an eine zu bildende Ecke und/oder vor, während und nach dem Abschneiden des Bandes am Ende des Abfahrens der Kontur der Glasscheibe zur Erzeugung eines geschlossenen Abstandhalterrahmens.
- In der Ausgleichstrecke 3, nämlich an den Schmalseiten des durch das Rollenpaar 32 begrenzten Führungsschlitzes, sind an der Bogeninnenseite ein erster Sensor 21 und an der Bogenaußenseite ein zweiter Sensor 22 angeordnet. Die Sensoren 21, 22, bei denen es sich z. B. um Reflexionslichtschranken handeln kann, sind mit der Maschinensteuerung verbunden und geben bei Annäherung des Bandes ein Signal. Nähert sich das Band infolge einer Unterlieferung durch den Bandtransport 1 im Verhältnis zu der durch die augenblickliche Appliziergeschwindigkeit bestimmten Umfangsgeschwindigkeit des Bandtransportes 9 dem Sensor 21, dann erhöht auf dessen Signal die Maschinensteuerung geringfügig die Antriebsdrehzahl und damit die Umfangsgeschwindigkeit des entsprechenden Rollenpaares 11, 13 (oder 12, 14) des Bandtransportes 1 und verhindert damit, dass auf das Band eine Zugspannung ausgeübt wird. Nähert sich umgekehrt das Band infolge einer Überlieferung durch den Bandtransport 1 dem bogenaußenseitigen Sensor 22, so gibt dieser das entsprechende Signal an die Maschinensteuerung, die daraufhin die Umfangsgeschwindigkeit des entsprechenden Rollenpaares des Bandtransportes 1 geringfügig verringert und dadurch verhindert, dass das Band vor dem Bandtransport 9 gestaucht und in diesem Zustand appliziert wird.

Durch die erfindungsgemäße Vorrichtung und durch das erfindungsgemäße Verfahren ergibt ergibt sich insbesondere für das Herstellen von Dreifach-Isolierglaselementen eine verbesserte Taktzeit, da zwei Glasscheiben gleichzeitig mit Abstandhalterband belegt werden können. Ein weiterer Vorteil besteht in einer Ausführungsform darin, dass eine (einzige) Butylversorgungseinheit 199 für beide Applizierköpfe 107 erforderlich ist.

Des Weiteren erlaubt es die erfindungsgemäße Vorrichtung, bis zu acht verschiedene Abstandhalter in den Versorgungsstationen (Klimaboxen - Gehäuse 109)) der Vorrichtung zu halten, so dass die Wechselzeiten beim Ändern der Abstandhalterbänder, bzw. wenn andere Luftzwischenräume zwischen den Glasscheiben gewünscht werden, verkürzt werden.

Die erfindungsgemäße Vorrichtung erlaubt es auch, synchron oder asynchron auf die zwei Applizierscheiben Abstandhalterbänder mit verschiedenen Abmessungen, insbesondere Breiten, zu applizieren, was bei Dreischeiben-Isolierglaseinheiten mit unterschiedlich dicken Luftzwischenräumen erwünscht bzw. erforderlich ist.

Von Vorteil bei der erfindungsgemäßen Vorrichtung ist auch, dass getrennte Sicherheitszonen vorliegen, was für die Wartung, Reinigung und Ausfallsicherheit von Vorteil ist.

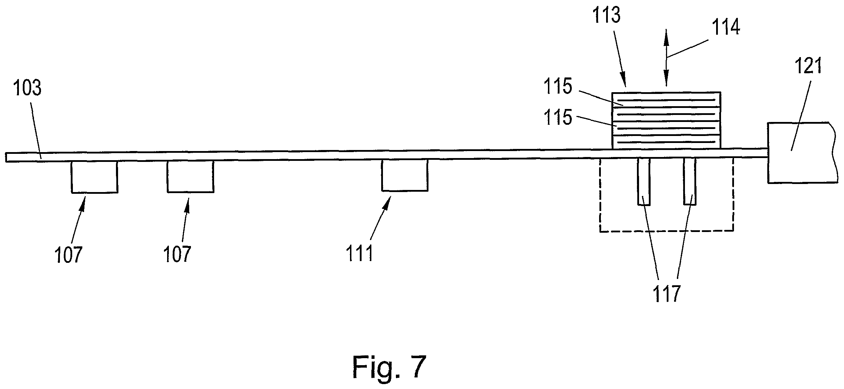

Fig. 7 zeigt in vereinfachter, schematischer Draufsicht einen Teil einer Anlage zum Herstellen von Isolierglas mit einer erfindungsgemäßen Vorrichtung mit zwei Applizierköpfen 107, dem Linearförderer 103, einer Station 111 zum Verschließen der Ecken in dem auf eine Glasscheibe applizierten Abstandhalterband, einem Pufferspeicher 113 mit Fächern 115 und einer Presse 121, z.B. einer Gasfüllpresse mit zwei beweglichen Pressplatten.

Der Pufferspeicher 113 ist zum Ausrichten der Fächer 115 auf Schienen 117 quer (Pfeil 114) verstellbar.

Deckscheiben und Glasscheiben, auf die Abstandhalterband als Abstandhalter appliziert sind ("Applizierscheiben"), werden vom Linearförderer 103 zum Pufferspeicher 113 gefördert und in Fächern 115 desselben zwischengelagert, bis sie je nach Bedarf und in der richtigen Reihenfolge aus dem Pufferspeicher 113 in die Presse 121 bewegt werden.

Der Pufferspeicher 113 erlaubt es auch, Glasscheiben zurück auf den Linearförderer 103 zu bewegen, was erforderlich sein kann, wenn eine Scheibe eines zusammengehörenden Paketes fehlt (z.B. weil sie beschädigt ist und ausgeschieden werden muss).

Der Pufferspeicher 113 kann auch so verstellt werden, dass Glasscheiben (insbesondere großformatige Scheiben) am Pufferspeicher 113 vorbei unmittelbar in die Presse 121 gefördert werden können.

Zusammenfassend kann ein Ausführungsbeispiel der Erfindung wie folgt beschrieben werden:

Eine Einrichtung zum gleichzeitigen Applizieren elastoplastischer Abstandhalterbänder auf zwei Glasscheiben mit identischer Umrissform und identischen Abmessungen besitzt zwei Applizierköpfe 107, die auf Linearachsen 105 im Wesentlichen lotrecht auf und ab verstellbar sind. Die Applizierköpfe 107 werden synchron bewegt, ebenso die beiden Glasscheiben durch ihnen zugeordnete Haltevorrichtungen, welche die Glasscheiben in einer zur Bewegungsrichtung der Applizierköpfe 107 senkrechten Richtung bewegen. So genügt es, eine einzige Glasscheibe eines Dreifach-Isolierglaselementes zu vermessen und es können beide Applizierscheiben des Isolierglaselementes gleichzeitig mit Abstandhalterbändern belegt werden, so dass Zeit gespart wird und die beiden Applizierscheiben mit der Deckscheibe in kürzerer Zeitspanne zu einem Isolierglaselement mit drei Scheiben zusammengebaut werden können.

## Patentansprüche

1. Vorrichtung zum Applizieren flexibler, insbesondere elastoplastischer, Abstandhalterbänder auf Glasscheiben im Zuge des Herstellens von Isolierglasscheiben, insbesondere von Isolierglasscheiben mit mehr als zwei, vorzugsweise drei, Glasscheiben, **gekennzeichnet durch** zwei oder drei synchron verstellbare Applizierköpfe (107), **durch** je wenigstens eine den Applizierköpfen (107) zugeordnete Vorratstrommel für Abstandhalterband, wobei die Applizierköpfe (107) einer Stützwand (101), an welcher Glasscheiben abgestützt sind, gegenüberliegend angeordnet sind, wobei die Applizierköpfe (107) zum gleichzeitigen Applizieren von Abstandhalterbändern auf wenigstens zwei Glasscheiben eingerichtet sind, wobei an der Stützwand (101) Einrichtungen (103) zum Linearfördern und Einrichtungen zum Halten von Glasscheiben vorgesehen sind, wobei jedem Applizierkopf (107) eine Einrichtung zum Halten einer Glasscheibe zugeordnet ist, und wobei den Applizierköpfen (107) eine gemeinsame Einrichtung (199) zum Aufbereiten und Zuführen von auf die Abstandhalterbänder aufzubringendem Kleber zugeordnet ist.

2. Vorrichtung nach Anspruch 1, **dadurch gekennzeichnet, dass** die Vorratstrommeln in klimatisierten Gehäusen (109) angeordnet sind.

3. Vorrichtung nach Anspruch 1 oder 2, **dadurch gekennzeichnet, dass** die Applizierköpfe (107) an, insbesondere vertikal ausgerichteten, zur Ebene der Stützwand (101) parallelen Linearführungen (105) verstellbar geführt sind.

4. Vorrichtung nach einem der Ansprüche 1 bis 3, **dadurch gekennzeichnet, dass** den Applizierköpfen (107) eine Einrichtung zum Vermessen der Glasscheiben, auf die Abstandhalterbänder zu applizieren sind, zugeordnet ist.

5. Vorrichtung nach Anspruch 1, **dadurch gekennzeichnet, dass** die Einrichtung (103) zum Linearfördern ausgewählt ist aus der Gruppe umfassend eine Reihe von Transportrollen und wenigstens ein Förderband.

6. Vorrichtung nach einem der Ansprüche 1 bis 5, **dadurch gekennzeichnet, dass** die Einrichtung zum Halten einer Glasscheibe wenigstens einen parallel zum Linearförderer (103) verstellbaren Saugkopf oder einen Saugbandförderer aufweist.

7. Vorrichtung nach einem der Ansprüche 1 bis 6, **dadurch gekennzeichnet, dass** jedem Applizierkopf (107) zwei oder mehr als zwei Vorratstrommeln für unterschiedliche Abstandhalterbänder zugeordnet sind.

8. Vorrichtung nacheinem der Ansprüche 1 bis 7, **dadurch gekennzeichnet, dass** die Einrichtung (199) zum Zuführen von Kleber auf Butylkautschukbasis eingerichtet ist.

9. Vorrichtung nach einem der Ansprüche 1 bis 8, **dadurch gekennzeichnet, dass** die Einrichtung (199) zum Zuführen von Kleber zu in den Applizierköpfen (107) vorgesehenen Düsen für das Auftragen von Kleber auf Seitenflächen der Abstandhalterbänder eingerichtet ist.

10. Vorrichtung nach einem der Ansprüche 1 bis 9, **dadurch gekennzeichnet, dass** die Einrichtungen zum Halten der Glasscheiben quer zu der Richtung, in welcher die Applizierköpfe (107) verstellbar sind, verstellbar sind.

11. Vorrichtung nach Anspruch 10, **dadurch gekennzeichnet, dass** die Einrichtungen zum Halten der Glasscheiben synchron verstellbar sind.

12. Anlage zum Herstellen von Isolierglas, **gekennzeichnet durch** eine Vorrichtung zum Applizieren von Abstandhalterband nach einem der Ansprüche 1 bis 11, und **durch** einen Pufferspeicher (113), der zwischen der Vorrichtung zum Applizieren von Abstandhalterband und einer dieser nachgeordneten Presse zum Zusammenbau und Verpressen von Isolierglasscheiben angeordnet ist.

13. Anlage nach Anspruch 12, **dadurch gekennzeichnet, dass** der Pufferspeicher (113) mehrere Speicherfächer (115) aufweist und quer zum Linearförderer (103) verstellbar ist.

14. Verfahren zum Applizieren von Abstandhalterbändern auf Glasscheiben im Zuge des Herstellens von Isolierglasscheiben, insbesondere von Isolierglasscheiben mit mehr als zwei, vorzugsweise drei Glasscheiben, bei den wenigstens zwei synchron verstellbare Applizierköpfe gleichzeitig verstellt werden, bei dem den Applizierköpfen Abstandhalterbänder von zugeordneten Vorratstrommeln zugeführt werden und bei dem Abstandhalterbänder gleichzeitig auf wenigstens zwei Glasscheiben als Abstandhalter appliziert werden, **dadurch gekennzeichnet, dass** für das Verfahren wenigstens eine Vorrichtung nach Anspruch 1 bis 11 eingesetzt wird.

15. Verfahren nach Anspruch 14, **dadurch gekennzeichnet, dass** Abstandhalterbänder auf zwei gleich große Glasscheiben durch synchrones Bewegen der Applizierköpfe und/oder der Glasscheiben appliziert werden.

16. Verfahren nach Anspruch 14 oder 15, **dadurch gekennzeichnet, dass** vor dem Applizieren der Abstandhalterbänder die Größe der Glasscheiben auf die Abstandhalterbänder zu applizieren sind, gemessen und die so erfassten Abmessungen der Glasscheiben der Steuerung für die Applizierköpfe zugeführt werden.

17. Verfahren einem der Ansprüche 14 bis 16, **dadurch gekennzeichnet, dass** zum Herstellen von Dreischeibenisolierglas eine erste Scheibe (Deckscheibe) ohne das Applizieren von Abstandhalterband durch die Anlage gefördert wird, dass die zweite Glasscheibe, zu dem, bezogen auf die Förderrichtung, zweiten Applizierkopf bewegt wird, dass die dritte Glasscheibe, zu dem, bezogen auf die Förderrichtung, ersten Applizierkopf bewegt wird, und dass beide Applizierköpfe in Bewegung gesetzt und durch kombiniertes Bewegen der Glasscheiben einerseits und der Applizierköpfe andererseits, auf den Rand beider Glasscheiben jeweils ein Abstandhalterband, als Abstandhalter appliziert wird.

18. Verfahren nach Anspruch 17, **dadurch gekennzeichnet, dass** die Abmessungen der ersten Glasscheibe erfasst werden und dass die so erfasste Größe der ersten Glasscheibe der Steuerung beider Applizierköpfe zugeführt wird.

19. Verfahren nach Anspruch 17 oder 18, **dadurch gekennzeichnet, dass** beide Applizierköpfe synchron und gleichzeitig Abstandhalterband auf die zweite und dritte Glasscheibe applizieren.

20. Verfahren nach einem der Ansprüche 17 bis 19, **dadurch gekennzeichnet, dass** durch die Applizierköpfe Abstandhalterbänder mit unterschiedlichen Abmessungen, insbesondere unterschiedlicher Breite, auf die zweite bzw. dritte Glasscheibe appliziert werden.

21. Verfahren nach einem der Ansprüche 14 bis 20, **dadurch gekennzeichnet, dass** sowohl die erste Glasscheibe als auch die mit Abstandhalterband jeweils belegte zweite und dritte Glasscheibe vor dem Zusammenbauen der Dreifachisolierglasscheibe in einem Pufferspeicher zwischengelagert werden und bei Bedarf und in der richtigen Reihenfolge aus dem Pufferspeicher in eine nachgeschaltete Vorrichtung, insbesondere eine Presse für den Zusammenbau von Isolierglas, wobei der Innenraum der Isolierglasscheibe gegebenenfalls mit einem von Luft verschiedenem Gas gefüllt wird, bewegt werden.

22. Verfahren nach einem der Ansprüche 14 bis 21, **dadurch gekennzeichnet, dass** beim Applizieren von Abstandhalterband, die die Glasscheiben horizontal hin- und herbewegt werden und dass die Applizierköpfe auf- und abbewegt werden, derart, dass durch die kombinierten Bewegungen auf jede der beiden Glasscheiben Abstandhalterband entlang des Randes appliziert wird.

## Claims

1. Device for application of flexible, in particular elastoplastic, spacer tapes to glass panes during production of insulating glass panes, in particular insulating glass panes having more than two, preferably three glass panes, **characterised by** two or three synchronously displaceable application heads (107) and by at least one feed drum for spacer tapes being assigned to each of the application heads (107), wherein the application heads (107) are arranged opposite to a support wall (101) on which glass panes are supported, wherein the application heads (107) are set up for the simultaneous application of spacer tapes to at least two glass panes, wherein means (103) for linear conveyance and means for holding glass panes are provided on the support wall (101), wherein a means for holding a glass pane is assigned to each application head (107), and wherein a common means (199) for preparing and feeding adhesive that is to be applied to the spacer tapes being assigned to the application heads 107.

2. Device according to claim 1, **characterised in that** the feed drums are arranged in climate-controlled housings (109) .

3. Device according to claim 1 or 2, **characterised in that** the application heads (107) are displaceably guided on in particular vertically aligned linear guides (105) that are parallel to the plane of the support wall (101).

4. Device according to any one of claims 1 to 3, **characterised in that** to the application heads (107) is assigned a means for measuring the glass panes to which spacer tapes are to be applied

5. Device according to claim 1, **characterised in that** the means (103) for linear conveyance is selected from the group comprising a series of transport rollers and at least one conveyor belt.

6. Device according to any one of claims 1 to 5, **characterised in that** the means for holding a glass pane has at least one suction head or suction belt conveyor that is displaceable parallel to the linear conveyor (103).

7. Device according to any one of claims 1 to 6, **characterised in that** two or more than two feed drums for different said spacer tapes are assigned to each application head (107).

8. Device according to any one of claims 1 to 7, **characterised in that** the means (199) is set up for supplying butyl rubber-based adhesive.

9. Device according to any one of claims 1 to 8, **characterised in that** the means (199) is set up for supplying adhesive to nozzles provided in the application heads (107) that are set up for applying adhesive to side surfaces of the spacer tapes.

10. Device according to any one of claims 1 to 9, **characterised in that** the means for holding the glass panes are displaceable transversely to the direction in which the application heads (107) can be displaced.

11. Device according to claim 10, **characterised in that** the means for holding the glass panes are synchronously displaceable.

12. Unit for producing insulating glass, **characterised by** a device for applying spacer tape according to any one of claims 1 to 11, and by a buffer store (113) that is arranged between the device for applying spacer tape and a downstream press for assembly and pressing of insulating glass panes.

13. Unit according to claim 12, **characterised in that** the buffer store (113) has several storage compartments (115) and is displaceable transversely to the linear conveyor (103).

14. Method for application of spacer tapes to glass panes during production of insulating glass panes, in particular insulating glass panes having more than two, preferably three glass panes, in which method at least two synchronously displaceable application heads are displaced at the same time, spacer tapes are supplied to the application heads from assigned feed drums, and spacer tapes are applied at the same time to at least two glass panes as spacers, **characterised in that** at least one device according to claim 1 to 11 is used for the method.

15. Method according to claim 14, **characterised in that** the spacer tapes are applied to two glass panes of the same size by synchronous movement of the application heads and/or the glass panes.

16. Method according to claim 14 or 15, **characterised in that** before applying the spacer tapes, the size of the glass panes to which the spacer tapes are to be applied is detected, and the dimensions, thus detected, of the glass panes are supplied to a controller for the application heads.

17. Method according to any one of claims 14 to 16, **characterised in that**, to produce triple pane insulating glass, a first pane (top pane) is conveyed through the unit without application of spacer tape, the second glass pane is moved to the application head that is second based on the conveyor direction, the third glass pane is moved to the application head that is first based on the conveyor direction, and these two application heads are set into motion and, by combined motion of the glass panes and also of the application heads, a spacer tape is applied to the edge of each of the two glass panes as a spacer.

18. Method according to claim 17, **characterised in that** the dimensions of the first glass pane are detected, and **in that** the detected size of the first glass pane is supplied to a controller of both application heads.

19. Method according to claim 17 or 18, **characterised in that** the two application heads apply spacer tape synchronously and at the same time to the second and third glass pane.

20. Method according to any one of claims 17 to 19, **characterised in that** the spacer tapes with different dimensions, in particular a different width, are applied to the second and third glass pane by the application heads.

21. Method according to any one of claims 14 to 20, **characterised in that** both the first glass pane and the second and third glass panes, which are each provided with spacer tape, before assembly of the triple insulating glass pane are intermediately stored in a buffer store, and as required they are moved out of the buffer store in the correct order into a downstream device, in particular a press for assembly of insulating glass, the interior of the insulating glass pane being filled as appropriate with a gas different from air.

22. Method according to any one of claims 14 to 21, **characterised in that**, when applying spacer tape, the glass panes are moved back and forth horizontally, and **in that** the application heads are moved up and down such that spacer tape is applied along the edge of each of the two glass panes by the combined movements.

## Revendications

1. Dispositif d'application de bandes d'écartement souples, en particulier élastoplastiques, sur des vitres dans le cadre de la fabrication de vitrages isolants, en particulier de vitrages isolants comportant plus de deux, de préférence trois vitres, **caractérisé par** deux ou trois têtes d'application (107) réglables de manière synchrone, par chaque fois au moins un tambour de réserve pour de la bande d'écartement associé aux têtes d'application (107), dans lequel les têtes d'application (107) sont disposées à l'opposé d'une paroi de soutien (101) sur laquelle les vitres s'appuient, les têtes d'application (107) étant conçues pour l'application simultanée de bandes d'écartement sur au moins deux vitres, étant prévus, au niveau de la paroi de soutien (101), des dispositifs (103) de transport linéaire et des dispositifs de maintien de vitres, étant associé à chaque tête d'application (107) un dispositif de maintien d'une vitre et dans lequel est associé aux têtes d'application (107) un dispositif commun (199) pour la préparation et l'acheminement de colle à appliquer sur les bandes d'écartement.

2. Dispositif selon la revendication 1, **caractérisé en ce que** les tambours de réserve sont disposés dans des enceintes climatisées (109).

3. Dispositif selon la revendication 1 ou 2, **caractérisé en ce que** les têtes d'application (107) sont guidées de manière réglable au niveau de guides linéaires (105), en particulier orientés verticalement par rapport au plan de la paroi de soutien (101).

4. Dispositif selon une des revendications 1 à 3, **caractérisé en ce qu'**est associé aux têtes d'application (107) un dispositif de mesure des vitres sur lesquelles les bandes d'écartement doivent être appliquées.

5. Dispositif selon la revendication 1, **caractérisé en ce que** le dispositif (103) de transport linéaire est sélectionné dans le groupe comprenant une série de rouleaux transporteurs et au moins une bande transporteuse.

6. Dispositif selon une des revendications 1 à 5, **caractérisé en ce que** le dispositif de maintien d'une vitre présente au moins une tête d'aspiration ou un convoyeur de bande d'aspiration réglable parallèlement au convoyeur linéaire (103).

7. Dispositif selon une des revendications 1 à 6, **caractérisé en ce qu'**à chaque tête d'application (107) sont associés deux ou plus de deux tambours de réserve pour différentes bandes d'écartement.

8. Dispositif selon une des revendications 1 à 7, **caractérisé en ce que** le dispositif (199) d'acheminement de colle est réalisé à base de butyle caoutchouc.

9. Dispositif selon une des revendications 1 à 8, **caractérisé en ce que** le dispositif (199) d'acheminement de colle permettant l'acheminement de colle vers les buses prévues dans les têtes d'application (107) est conçu pour l'application de colle sur des surfaces latérales des bandes d'écartement.

10. Dispositif selon une des revendications 1 à 9, **caractérisé en ce que** les dispositifs de maintien des vitres sont déplaçables transversalement par rapport au sens dans lequel les têtes d'application (107) sont déplaçables.

11. Dispositif selon la revendication 10, **caractérisé en ce que** le dispositif de maintien des vitres sont déplaçables de manière synchrone.

12. Installation de fabrication de verre isolant, **caractérisée par** un dispositif d'application de bande d'écartement selon une des revendications 1 à 11 et par une réserve tampon (113) qui est disposée entre le dispositif d'application de bande d'écartement et une presse installée en aval de celui-ci pour l'assemblage et la compression de vitrages isolants.

13. Installation selon la revendication 12, **caractérisé en ce que** la réserve tampon (113) présente plusieurs compartiments de réserve (115) et est déplaçable transversalement par rapport au convoyeur linéaire (103).

14. Procédé d'application de bandes d'écartement sur des vitres dans le cadre de la fabrication de vitrages isolants, en particulier de vitrages isolants comportant plus de deux, de préférence trois vitres, dans lequel au moins deux têtes d'application réglable de manière synchrone sont déplacées simultanément, dans lequel sont acheminés aux têtes d'application des bandes d'écartement de tambours de réserve associés et dans lequel des bandes d'écartement sont appliquées simultanément sur au moins deux vitres en tant qu'écarteurs, **caractérisé en ce que**, pour le procédé, au moins un dispositif selon la revendication 1 à 11 est utilisé.

15. Procédé selon la revendication 14, **caractérisé en ce que** des bandes d'écartement sont appliquées sur deux vitres de taille égale par mouvement synchrone des têtes d'application et/ou des vitres.

16. Procédé selon la revendication 14 ou 15, **caractérisé en ce que**, avant l'application des bandes d'écartement, la taille des vitres sur lesquelles des bandes d'écartement doivent être appliquées est mesurée et les dimensions ainsi enregistrées des vitres sont communiquées à la commande des têtes d'application.

17. Procédé selon une des revendications 14 à 16, **caractérisé en ce que**, pour fabriquer du verre isolant à triple vitrage, une première vitre (vitre de couverture) est transportée sans application de bande d'écartement par l'installation, que la deuxième vitre est déplacée vers la deuxième tête d'application par rapport au sens de transport, que la troisième vitre est déplacée vers la première tête d'application par rapport au sens de transport et que les deux têtes d'application sont mises en mouvement et que, par mouvement combiné des vitres d'une part et des têtes d'application d'autre part, respectivement une bande d'écartement est appliquée en tant qu'écarteur sur le bord des deux vitres.

18. Procédé selon la revendication 17, **caractérisé en ce que** les dimensions de la première vitre sont enregistrées et que la taille ainsi enregistrée de la première vitre est communiquée à la commande des deux têtes d'application.

19. Procédé selon la revendication 17 ou 18, **caractérisé en ce que** les deux têtes d'application appliquent de manière synchrone et simultanée de la bande d'écartement sur les deuxième et troisième vitres.

20. Procédé selon une des revendications 17 à 19, **caractérisé en ce que** des bandes d'écartement à dimensions différentes, en particulier de largeur différente, sont appliquées sur la deuxième ou troisième vitre par les têtes d'application.

21. Procédé selon une des revendications 14 à 20, **caractérisé en ce qu'**aussi bien la première vitre que les deuxième et troisième vitres respectivement plaquées de bandes d'écartement sont stockées provisoirement avant l'assemblage du triple vitrage isolant dans une réserve tampon et, en cas de besoin et dans l'ordre exact, sont déplacés depuis la réserve tampon vers un dispositif installé en aval, en particulier une presse pour l'assemblage de verre isolant, l'intérieur du vitrage isolant étant éventuellement rempli d'un gaz différent de l'air.

22. Procédé selon une des revendications 14 à 21, **caractérisé en ce que**, lors de l'application de bande d'écartement, des vitres sont déplacées horizontalement en va-et-vient et que les têtes d'application sont déplacées de haut en bas de manière à ce que, par ces mouvements combinés, de la bande d'écartement soit appliquée sur chacune des deux vitres le long du bord.
